# EUROPEAN PATENT SPECIFICATION

(11) **EP 3 075 570 B1**
(45) Date of publication and mention of the grant of the patent: **22.11.2017**
(21) Application number: 16159987.3
(22) Date of filing: 11.03.2016
(51) Int. Cl.: B60C 9/00, B60C 9/18

(54) **A CROWN REINFORCEMENT FOR A PNEUMATIC TIRE**
GÜRTELVERSTÄRKUNG FÜR EINEN LUFTREIFEN
ARMATURE DE SOMMET POUR PNEUMATIQUE

(30) Priority: 31.03.2015 US 201514674335
(43) Date of publication of application: 05.10.2016
(73) Proprietor: The Goodyear Tire & Rubber Company, Akron, Ohio 44316 (US)
(72) Inventor: LIONETTI, Robert Edward, 7227 Bereldange (LU); FOSAM, Richard, 7462 Moesdorf (LU); EULER, Erik Simon Marcel, 9170 Sint-Gillis-Waas (BE); LESCAUD, Olivier, 6600 Bastogne (BE)
(74) Representative: Kutsch, Bernd

(56) References cited:
- EP-A1- 2 340 947
- KR-A- 20010 048 478
- US-A- 3 720 569
- US-A- 3 999 586
- US-A1- 2013 032 266

## Description

### Field of the Invention

The present invention relates to a pneumatic tire, and more particularly, to a belt construction for a pneumatic tire.

### Background of the Invention

A pneumatic tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber is located axially and radially outward, respectively, of the carcass ply. A belt structure is disposed radially between the carcass ply and tread rubber.

The bead area is one part of the tire that contributes a substantial amount to the rolling resistance of the tire, due to cyclical flexure which also leads to heat buildup. Under conditions of severe operation, as with runflat and high performance tires, the flexure and heating in the bead region can be especially problematic, leading to separation of mutually adjacent components that have disparate properties, such as the respective moduli of elasticity. In particular, the ply turnup ends may be prone to separation from adjacent structural elements of the tire.

A conventional ply may be reinforced with materials such as polyamide/nylon, polyester, rayon, and/or metal, which have much greater stiffness (i.e., modulus of elasticity) than the adjacent rubber compounds of which the bulk of the tire is made. The difference in elastic modulus of mutually adjacent tire elements may lead to separation when the tire is stressed and deformed during use.

The conventional belt structure comprises a plurality of reinforcement layers in which cords are laid parallel to each other. Due to the unidirectional load carrying capability of each reinforcement layer, an even number of such layers may be stacked up to manage the force transfer in opposite directions. Two such reinforcement layers of steel wires may be used as a belt-package in a typical radial passenger tire, contributing significant weight to the pneumatic tire.

A conventional pneumatic tire is described in US 3 999 586 A.

### Summary of the Invention

The invention relates to a pneumatic tire in accordance with claim 1 and to a method in accordance with claim 12.

Dependent claims refer to preferred embodiments of the invention.

A pneumatic tire in accordance with the present invention includes a carcass reinforced by a carcass ply extending from a first bead to a second bead and a single reinforcement disposed radially outward of the carcass ply in a crown portion of the pneumatic tire, the single reinforcement comprising woven strips reinforced with cords, preferably steel cords, the strips being of a preferably constant width of 3.0 mm to 30.0 mm.

According to another preferred aspect of the pneumatic tire, the steel cords have a 2 x 0.295 High Tensile steel construction.

According to still another preferred aspect of the pneumatic tire, the steel cords have a 2+2 x 0.22 Ultra Tensile steel construction.

According to yet another preferred aspect of the pneumatic tire, the steel cords are of identical construction.

According to still another preferred aspect of the pneumatic tire, the reinforcement also comprises carbon fiber.

According to yet another preferred aspect of the pneumatic tire, the reinforcement also comprises polyester.

According to still another preferred aspect of the pneumatic tire, the reinforcement also comprises polyamide.

According to yet another preferred aspect of the pneumatic tire, the reinforcement also comprises aramid.

According to still another preferred aspect of the pneumatic tire, the reinforcement also comprises fused polyester.

A method in accordance with the present invention designs a pneumatic tire. The method comprises the step of replacing a first belt, a second belt, and an overlay with a single woven reinforcement, the single woven reinforcement comprising strips reinforced by cords with each strip having a preferably constant width in a range of from 3.0 mm to 30.0 mm.

### Definitions

"Axial" and "Axially" mean the lines or directions that are parallel to the axis of rotation of the tire.

"Carcass" means the tire structure apart from the belt structure, tread, undertread over the plies, but including the beads.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers, with which the plies and belts are reinforced.

"Equatorial Plane" means the plane perpendicular to the tire's axis of rotation and passing through the center of its tread; or the plane containing the circumferential centerline of the tread.

"Lateral" means a direction parallel to the axial direction.

"Radial" and "radially" mean directions radially toward or away from the axis of rotation of the tire.

### Brief Description of the Drawings

The structure, operation, and advantages of the invention will become more apparent upon contemplation of the following description taken in conjunction with the accompanying drawings, wherein:
FIG. 1 represents a schematic cross-sectional view of an example tire design for use with the present invention;
FIG. 2 represents a schematic detail view of the bead region of the example tire design shown in FIG. 1; and
FIG. 3 represents a schematic detail view of a crown reinforcement in accordance with the present invention.

### Detailed Description of Example Embodiments of the Present Invention

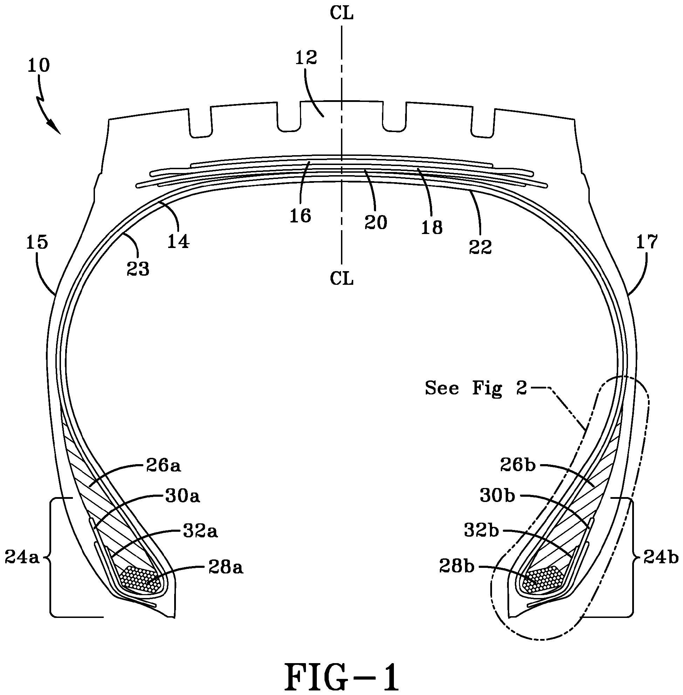

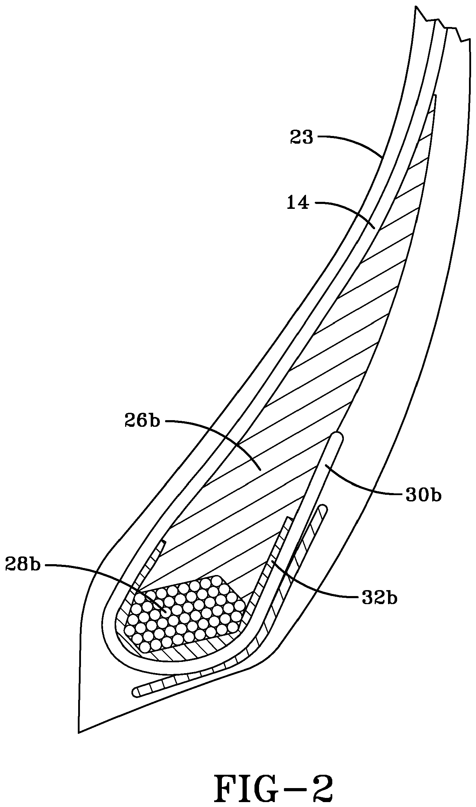

FIGS. 1 and 2 show an example tire design 10 for use with reinforcing structures, such as flippers and chippers, in accordance with the present invention. The example tire 10 has a tread 12, an inner liner 23, a belt structure comprising belts 18, 20, an overlay 16, a carcass 22 with a single carcass ply 14, two sidewalls 15,17, and two bead regions 24a, 24b comprising bead filler apexes 26a, 26b and beads 28a, 28b. The example tire 10 is suitable, for example, for mounting on a rim of a passenger vehicle. The carcass ply 14 includes a pair of axially opposite end portions 30a, 30b, each of which is secured to a respective one of the beads 28a, 28b. Each axial end portion 30a or 30b of the carcass ply 14 is turned up and around the respective bead 28a, 28b to a position sufficient to anchor each axial end portion 30a, 30b, as seen in detail in FIG. 2.

The carcass ply 14 may be a rubberized ply having a plurality of substantially parallel carcass reinforcing members made of such material as polyester, rayon, or similar suitable organic polymeric compounds. The carcass ply 14 may engage the axial outer surfaces of two flippers 32a, 32b.

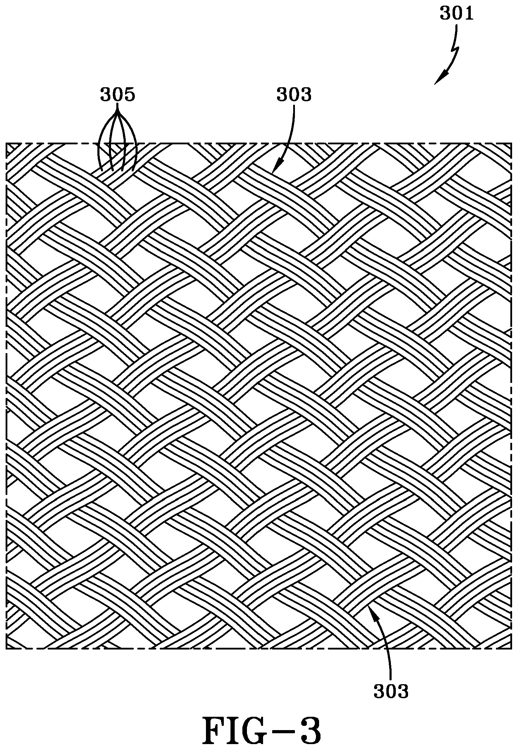

A conventional crown reinforcement layup usually requires between 2-3 sine waves per revolution to achieve sufficient cornering stiffness for a tire 10. Conventional strips may be applied parallel to each other and the cord angle in a single layer may change, for example, from 21 degrees (right) to - 21 degrees (left). This alternating of cord angle within the same belt layer may cause significant lateral force variations. To mitigate and/or overcome these lateral force variations, in accordance with the present invention, strips may be applied in a woven pattern at a specified angle (FIG. 3).

The angle of the strips is usually a minimum 20 degrees cured to produce suitable cornering forces. The number of layers at the edges of the reinforcement may be less than 4. The maximum spacing between parallel strips may be one reinforcement cord width, thereby maximizing the interlacing weave. This maximum interlacing may greatly reduce the lateral force variations. The cords may be steel, carbon fiber, polyester, polyamide, aramid, and/or hybrid combinations and/or fused polyester stiff cord, such as that described in US-A-2013/0240106.

Utilizing combinations of different materials may provide advantages for the tire 10, particularly, weight and thermal conductivity. For example, the strength of steel reinforcements may be combined with aramid or fiber glass to reduce weight and maintain stiffness and strength. Carbon fiber may be added to increase thermal conductivity of the reinforcement thereby increasing high speed performance by conducting heat away from hot spots.

In accordance with the present invention, the overlay 16 and belts 18, 20 are replaced with a single woven crown reinforcement 301 (FIG. 3). The reinforcement 301 is made of woven strips 303 of one or more layers. The strips 303 have a width in a range of from 3.0 mm - 30.0 mm or from 10 mm to 20 mm such as 15 mm and comprise rubber reinforced with one or more cords 305 preferably having an elongation at break of less than 2.5%.

Conventional strips are usually reinforced with cords having an elongation to break of greater than 3.5%, greater than 4%, or greater than 4.5%.

Conventional high-speed passenger tires may have a spirally wound overlay reinforcement radially outward of a belt structure.

The crown reinforcement 301 allows removal of the overlay while the modified pneumatic tire still functions suitably at high speeds.

Removing the overlay reduces material cost, tire weight, and flat spotting. The elimination of cut belt edges may also mitigate belt edge separation and provide improved crown durability.

The woven crown reinforcement 301 is preferably constructed using 1-5 periods of sinusoidal wrap per revolution providing cord/tape angles between 20-40 degrees, or between 25-35 degrees to provide sufficient cornering stiffness.

The cords may have a 2 x 0.295 High Tensile steel and/or a 2+2 x 0.22 Ultra Tensile steel construction.

As stated above, the continuous strip crown reinforcement 301 replaces a conventional structure of two steel belts 18, 20 and an overlay 16, for example, for passenger and radial light truck tires. This could leads to a current cost savings of about 1.5 USD to 3 USD per tire, improved durability, and more flexible manufacturing.

The strips 303 may be reinforced with steel, steel textile, and/or hybrid cords and/or monofilaments. This reinforcement 301 may further eliminate belt stock preparation steps and provide increased flexibility choosing reinforcement materials. Elimination of the overlay 16 may reduce tire weight, flat spotting, and cost. Since this reinforcement 301 may provide suitable stiffness and strength to a consumer tire, then high speed, plunger, durability, and ride and handling requirements may also be met or exceeded. This reinforcement 301 may further produce increasing rolling resistance by implementing alternative methods to improve tack during the weaving process.

The reinforcement 301 may be woven over a carcass or maybe applied thereto in flat band form and expanded.

Furthermore, the reinforcement 301 may be used with a tire from which the tread has been removed, new tread stock applied and vulcanized to form a retread tire.

In accordance with the present invention, the reinforcement 301 (FIG. 3) is shown.

The angle of the cords 305 is preferably approximately 30° and the width of each strip 303 is preferably approximately 10.0 mm.

As stated above, a single reinforcement 301 in accordance with the present invention may produce reduced weight with comparable performance in a modified tire. This single reinforcement 301 thus lightens the tire 10 with essentially no performance tradeoff, even though the complexities of the structure and behavior of the pneumatic tire are such that no complete and satisfactory theory has been propounded. Only through extensive experimentation has the single reinforcement 301 of the present invention been revealed as an excellent, unexpected, and unpredictable option for a complete belt structure.

## Claims

1. A pneumatic tire (10) comprising a carcass (22) reinforced by one or more carcass plies (14) extending from a first bead to a second bead (20a, 20b) and a single reinforcement (301) disposed radially outward of the one or more carcass plies (14) in a crown portion of the pneumatic tire (10), the single reinforcement (301) comprising woven strips (303) reinforced with cords (305), the strips (303) having a width in a range of from 3.0 mm to 30.0 mm.

2. The pneumatic tire of claim 1 wherein the strips (303) have a constant width or an at least substantially constant width.

3. The pneumatic tire of claim 1 or 2 wherein the cords (305) are steel cords.

4. The pneumatic tire of at least one of the previous claims wherein the cords (305) have a 2 x 0.295 construction, preferably a 2 x 0.295 High Tensile steel cord construction.

5. The pneumatic tire of at least one of the previous claims 1 to 3 wherein the cords have a 2+2 x 0.22 construction, preferably a 2+2 x 0.22 Ultra Tensile steel cord construction.

6. The pneumatic tire of at least one of the previous claims wherein the cords (305) are of identical construction.

7. The pneumatic tire of at least one of the previous claims wherein the single reinforcement (301) comprises steel cords (305) and carbon fiber.

8. The pneumatic tire of at least one of the previous claims wherein the single reinforcement (301) comprises steel cords (305) and polyester.

9. The pneumatic tire of at least one of the previous claims wherein the single reinforcement (301) comprises steel cords (305) and polyamide.

10. The pneumatic tire of at least one of the previous claims wherein the single reinforcement (301) comprises steel cords (305) and aramid.

11. The pneumatic tire of at least one of the previous claims wherein the single reinforcement (301) comprises steel cords (305) and fused polyester.

12. A method for designing a pneumatic tire, the method comprising replacing a first belt, a second belt, and an overlay of a tire (10) with a single woven reinforcement (301), the single woven reinforcement comprising strips (303) reinforced by cords (305) with each strip (303) having a width in a range of from 3.0 mm to 30.0 mm.

## Patentansprüche

1. Luftreifen (10), umfassend eine Karkasse (22), die durch eine oder mehrere Karkassenlagen (14) verstärkt ist, die sich von einem ersten Wulst zu einem zweiten Wulst (20a, 20b) erstreckt beziehungsweise erstrecken, und eine einzige Verstärkung (301), die radial auswärts von der einen oder den mehreren Karkassenlagen (14) in einem Zenitbereich des Luftreifens (10) angeordnet ist, wobei die einzige Verstärkung (301) mit Korden (305) verstärkte gewebte Streifen (303) umfasst, wobei die Streifen (303) eine Breite im Bereich von 3,0 mm bis 30,0 mm aufweisen.

2. Luftreifen nach Anspruch 1, wobei die Streifen (303) eine konstante Breite oder eine mindestens im Wesentlichen konstante Breite haben.

3. Luftreifen nach Anspruch 1 oder 2, wobei die Korde (305) Stahlkorde sind.

4. Luftreifen nach mindestens einem der vorhergehenden Ansprüche, wobei die Korde (305) eine 2 x 0,295-Konstruktion haben, bevorzugt eine 2 x 0,295-Kordkonstruktion aus hochfestem Stahl.

5. Luftreifen nach mindestens einem der vorhergehenden Ansprüche 1 bis 3, wobei die Korde eine 2+2 x 0,22-Konstruktion haben, bevorzugt eine 2+2 x 0,22-Kordkonstruktion aus höchstfestem Stahl.

6. Luftreifen nach mindestens einem der vorhergehenden Ansprüche, wobei die Korde (305) von identischer Konstruktion sind.

7. Luftreifen nach mindestens einem der vorhergehenden Ansprüche, wobei die einzige Verstärkung (301) Stahlkorde (305) und Kohlefaser umfasst.

8. Luftreifen nach mindestens einem der vorhergehenden Ansprüche, wobei die einzige Verstärkung (301) Stahlkorde (305) und Polyester umfasst.

9. Luftreifen nach mindestens einem der vorhergehenden Ansprüche, wobei die einzige Verstärkung (301) Stahlkorde (305) und Polyamid umfasst.

10. Luftreifen nach mindestens einem der vorhergehenden Ansprüche, wobei die einzige Verstärkung (301) Stahlkorde (305) und Aramid umfasst.

11. Luftreifen nach mindestens einem der vorhergehenden Ansprüche, wobei die einzige Verstärkung (301) Stahlkorde (305) und verschmolzenes Polyester umfasst.

12. Verfahren zur Gestaltung eines Luftreifens, wobei das Verfahren das Ersetzen eines ersten Gürtels, eines zweiten Gürtels und einer Gürteldecklage eines Reifens (10) durch eine einzige gewebte Verstärkung (301) umfasst, wobei die einzige gewebte Verstärkung mit Korden (305) verstärkte gewebte Streifen (303) umfasst, wobei jeder Streifen (303) eine Breite im Bereich von 3,0 mm bis 30,0 mm aufweist.

## Revendications

1. Bandage pneumatique (10) comprenant une carcasse (22) renforcée par une ou plusieurs nappes de carcasse (14) s'étendant depuis un premier talon jusqu'à un second talon (20a, 20b), et un renforcement unique (301) disposé en position radiale à l'extérieur desdites une ou plusieurs nappes de carcasse (14) dans une portion faisant office de sommet du bandage pneumatique (10), le renforcement unique (301) comprenant des bandes tissées (303) renforcées avec des câblés (305), les bandes (303) possédant une largeur dans une plage de 3,0 mm à 30,0 mm.

2. Bandage pneumatique selon la revendication 1, dans lequel les bandes (303) possèdent une largeur constante ou une largeur au moins essentiellement constante.

3. Bandage pneumatique selon la revendication 1 ou 2, dans lequel les câblés (305) sont des câblés en acier.

4. Bandage pneumatique selon au moins une des revendications précédentes, dans lequel les câblés (305) possèdent une construction 2 x 0,295, de préférence une construction 2 x 0,295 de câblé en acier à haute résistance mécanique.

5. Bandage pneumatique selon au moins une des revendications précédentes 1 à 3, dans lequel les câblés possèdent une construction 2+2 x 0,22, de préférence une construction 2+2 x 0,22 de câblé en acier à résistance mécanique ultra élevée.

6. Bandage pneumatique selon au moins une des revendications précédentes, dans lequel les câblés (305) sont de construction identique.

7. Bandage pneumatique selon au moins une des revendications précédentes, dans lequel le renforcement unique (301) comprend des câblés en acier (305) et des fibres de carbone.

8. Bandage pneumatique selon au moins une des revendications précédentes, dans lequel le renforcement unique (301) comprend des câblés en acier (305) et du polyester.

9. Bandage pneumatique selon au moins une des revendications précédentes, dans lequel le renforcement unique (301) comprend des câblés en acier (305) et du polyamide.

10. Bandage pneumatique selon au moins une des revendications précédentes, dans lequel le renforcement unique (301) comprend des câblés en acier (305) et de l'aramide.

11. Bandage pneumatique selon au moins une des revendications précédentes, dans lequel le renforcement unique (301) comprend des câblés en acier (305) et du polyester condensé.

12. Procédé de conception d'un bandage pneumatique, le procédé comprenant le fait de remplacer une première ceinture, une seconde ceinture et une surcouche d'un bandage pneumatique (10) par un renforcement tissé unique (301), le renforcement tissé unique comprenant des bandes (303) renforcées par des câblés (305), chaque bande (303) possédant une largeur dans une plage de 3,0 mm à 30,0 mm.
